# EUROPEAN PATENT APPLICATION

(11) **EP 1 995 907 A1**
(43) Date of publication of application: **26.11.2008**
(21) Application number: 07739554.9
(22) Date of filing: 16.03.2007
(51) Int. Cl.: H04L 9/12

(54) **QUANTUM ENCRYPTION TRANSMISSION SYSTEM AND OPTICAL CIRCUIT**

(30) Priority: 16.03.2006 JP 2006072971; 13.07.2006 JP 2006192877
(71) Applicant: NEC Corporation, Minato-ku Tokyo 108-8001 (JP)
(72) Inventor: NAMBU, Yoshihiro, Tokyo 108-8001 (JP); YOSHINO, Kenichiroh, Minato-ku, Tokyo 108-8001 (JP)
(74) Representative: MacDougall, Alan John Shaw
(86) International application number: PCT/JP2007/056113
(87) International publication number: WO 2007/105833

(57) **Abstract**

A quantum cryptography transmission system according to the present invention comprises a transmission device (10A), a reception device (20A), and a transmission path (30) configured to connect between the devices. The transmission device includes a light emitting unit (11) configured to emit photons serving as quantum bit information carriers, and a transmission-side optical circuit (12A). The reception device includes a light receiving unit (21) configured to detect photons serving as quantum bit information carriers, and a reception-side optical circuit (22A). Each of the transmission-side optical circuit (12A) and reception-side optical circuit (22A) is an optical circuit which is configured of an unbalanced Mach-Zehnder interferometer (123; 223) including an optical delay circuit (123-1; 223-1) in one arm thereof, and two transmission-side 3-dB couplers (126; 226) and (127; 227) to be connected to the two arms of the unbalanced Mach-Zehnder interferometer (123; 223), respectively.

## Description

### Technical Field

The present invention relates to a quantum cryptography transmission system, and particularly relates to a quantum cryptography transmission system for performing a quantum cryptographic key distribution wherein cryptographic secret key is shared by optical fiber communication, and an optical circuit employed therewith.

### Background Art

In recent years, explosive growth of the Internet and practical realization of e-commerce have enhanced social need for cryptography technology, such as communicative maintenance of secret, prevention from tampering, individual authentication, and so forth.

Currently, a common key system such as DES (Data Encryption Standard) encryption and a public key system such as RSA (R. Rivest, A. Shamir, L. Adlman) encryption have come into widespread use. However, these are based on computational complexity safety.

That is to say, the present encryption scheme is threatened with progress of computer hardware and decryption algorithms. Particularly, with fields requiring extremely high safety such as information relating to transactions between banks and information relating to military affairs and diplomacy, practical realization of an encryption scheme which is safe in principle would have great impact.

Examples of an encryption scheme with which unconditional safety is proved with information theory include a one-time-pad encryption. The characteristics of the one-time-pad encryption is in that a cryptographic key having the same length as a communication sentence is employed and this cryptographic key is disposable after one use.

This method is currently widely known as BB84 protocol with Non-patent Document 1 (IEEE Int., Conf., on Computers, Systems, and Signal Processing, Bangalore, India, written by Bennett and Brassard, p. 175 (1984)). A specific protocol for distributing a cryptographic secret key employed for the one-time-pad encryption in a safe manner has been proposed by Bennett and others for the first time. This has touched off widespread quantum cryptography study.

With quantum cryptrography, a physical law guarantees the safety of cryptography, so ultimate safety guarantee can be realized independent of the limit of the capabilities of a computer. With a quantum cryptography device currently well-studied, information of one bit is encoded in a single-photon state and is transmitted. This is because photons are robust as to turbulence from the environment as compared to other quantum systems and also a long-distanced cryptographic key distribution can be expected by utilizing existing optical fiber communication technology.

With a quantum cryptography device of which the safety has been proved theoretically, as described in Non-patent Document 1, the two distinguishable states of a quantum mechanical two-degree-of-freedom system and a state conjugated therewith (a state overlapped therewith) are employed, thereby transmitting a secret key safely. A protocol has been designed such that tapping actions create turbulence as to a quantum mechanical state and leakage information amount can be estimated from an error of the data of regular senders and receivers.

A quantum state employed for such information communication is frequently referred to as quantum information. A quantum mechanical two-degree-of-freedom system serving as quantum information is referred to as a quantum bit and is equivalent to a spin 1/2 system mathematically. The related art will be described below in a case wherein a physical system serving as a carrier is a photon.

The related art will be described below regarding a cryptographic key distribution device employing an optical fiber for long-distanced transmission as a transmission path with a photon as a quantum bit carrier, which relates to the present invention. The details regarding a quantum cryptography device employing photons are described in Non-patent Document 2 ("Experimental Quantum Cryptography" written by Zbinden and others, "INTRODUCTION TO QUANTUM COMPUTATION AND INFORMATION" written and edited by Lo and others), (World Scientific, published in 1998), p. 120), Non-patent Document 3 ("Quantum Cryptography" written by Ekert and others, "The Physics Quantum Information" written and edited by Bouwmeester and others (Springer, published in 2000), p. 15), Non-patent Document 4 ("Quantum Cryptography" written by Gisin and others, Review of Modern Physics, No. 74 (published in 2002), pp. 145-195).

With Non-patent Document 1, information is encoded to two polarization states which a photon can have. Implementation of a quantum cryptography device called polarization coding has been proposed. Note however, polarization coding needs real-time control and compensation of polarization rotation within a transmission path, so is not frequently employed as a method for implementing a long-distanced cryptographic key distribution system employing an optical fiber as a transmission path.

As a long-distanced cryptographic key distribution system, implementation of a quantum cryptography device called phase coding has also been proposed and realized by Bennett and others wherein information is encoded to relative topology between two-ream weak light pulses.

Several proposals of a method for generating photons serving as quantum bit carriers have been made separately from such a coding method. Promising methods of these include a method employing coherent weak light pulses and a method employing a quantum correlation photon pair. The related art will be described below in detail regarding a quantum cryptography device employing each method.

### Quantum Cryptography Device Employing Coherent Weak Light Pulses

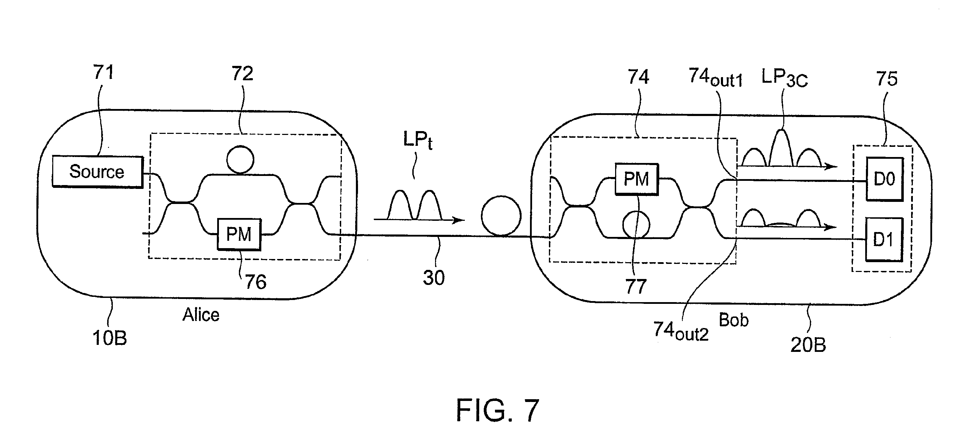

Fig. 7 illustrates a quantum cryptography device by phase coding employing coherent attenuated light pulses described in Non-patent Documents 2 through 4. This quantum cryptography device employs an optical interference system having a configuration wherein two unbalanced Mach-Zehnder interferometers are connected at an optical fiber transmission path in series.

An attenuated short pulse generated at an attenuated laser light source 71 provided in a transmission unit 10B is input to an unbalanced Mach-Zehnder interferometer 72 of the transmission unit 10B, thereby generating (preparing) coherent two-ream attenuated pulses 7LPt spatially separated by the difference between long and short length optical paths thereof on an optical fiber transmission path 30.

Now, the term "coherent" means that relative phases between the two pulses of the two-ream attenuated light pulses LPt can be clearly defined by the unbalanced Mach-Zehnder interferometer 72 wherein the difference between long and short length optical paths has been clearly defined.

The two-ream attenuated light pulses LPt receive turbulence during transmission on the optical fiber transmission path 30, but the relative phase relation of these and the relation of polarization planes are saved. The two-ream attenuated light pulses LPt are converted into three-ream pulse-like photon output LP_{3C} by an unbalanced Mach-Zehnder interferometer 74 of a reception unit 20B and are output to two ports 74ₒᵤₜ₁ and 74ₒᵤₜ₂ on the downstream side.

With photon detectors 75 of the reception unit 20B, the presence of a photon included in central light pulses of the three-ream pulse-like photon output LP_{3C} output to the two downstream ports 74ₒᵤₜ₁ and 74ₒᵤₜ₂ of the unbalanced Mach-Zehnder interferometer 74 is distinguished and recorded in a recording device (not shown).

Of the three-ream pulse-like photon output LP_{3C}, light pulses which contribute to the central light pulses are light pulses passing through the long length of the unbalanced Mach-Zehnder interferometer 72 with the transmission unit 10B and passing through the short length of the unbalanced Mach-Zehnder interferometer 74 with the reception unit 20B, and light pulses passing through the short length of the unbalanced Mach-Zehnder interferometer 72 with the transmission unit 10B and passing through the long length of the unbalanced Mach-Zehnder interferometer 74 with the reception unit 20B. Accordingly, the intensity ratio of the central pulses to the two output ports 74ₒᵤₜ₁ and 74ₒᵤₜ₂ due to interference of these two contributions depends on the optical delay (relative phases) of the two-ream attenuated light pulses LPt in a sinusoidal function manner.

With the above-mentioned optical interference system, modulation is applied to the optical delay (relative phases) of the two-ream attenuated light pulses LPt, whereby cryptographic key distribution can be performed based on the principle of quantum cryptography. For the sake of this, while light pulses passing through the unbalanced Mach-Zehnder interferometer 72 of the transmission unit 10B, four-value phase modulation {0, π/2, π, 3π/2} is performed with a phase modulator 76 included in the transmission unit 10B, and while two-ream pulses after transmission of the optical fiber transmission path 30 passing through the unbalanced Mach-Zehnder interferometer 74 of the reception unit 20B, two-value phase modulation {0, π/2} is performed with a phase modulator 77 included in the reception unit 20B.

Optical delay at the unbalanced Mach-Zehnder interfrometers 72 and 74 is appropriately adjusted, thereby executing a quantum cryptographic key distribution protocol employing nonorthogonal four states proposed in Non-patent Document 1, and enabling safe key distribution to be performed.

A quantum cryptography device based on phase coding is compatible with the optical fiber transmission path 30, thereby providing an advantage wherein a long-distanced key distribution can be performed. Note however, this device includes a problem wherein the relative optical delay of the unbalanced Mach-Zehnder interferometers 72 and 74 which the transmission unit 10B and the reception unit 20B have, respectively, needs to be maintained with precision equivalent to a light wavelength.

The optical delay of the interferometers 72 and 74 disposed in a manner distributed to the transmission unit 10B and reception unit 20B, respectively, sways or drifts independently due to change in temperature or other causes, so light interference effects are readily eliminated. In order to solve this problem, an active control device is needed wherein change in the relative optical delay of both interferometers 72 and 74 is measured, and the measurement results are fed back to maintain the relative optical delay uniformly. Such a measuring device itself complicates the system, and also reference light employed for measurement increases system noise, and becomes a cause of deterioration in performance of the quantum cryptography device.

In recent years, in order to such a problem, a quantum cryptography device to which planar lightwave circuit (PLC: Photonic Lightwave Circuit) technology has been applied has been devised and developed. Examples of a quantum cryptrography device applying the planar lightwave circuit technology are disclosed in Non-patent Document 5 ("BB84 Quantum Key Distribution System Based on Silica-Based Planar Lightwave Circuits" written by Nambu and others, Japan Journal of Applied Physics, No. 43 (published in 2004), p. L1109), Non-patent Document 6 ("Single-photon Interference over 150 km Transmission Using Silica-based Integrated-optic Interferometers for Quantum Cryptography" written by Kimura and others, Japan Journal of Applied Physics, No. 43 (published in 2004), p. L1217), Non-patent Document 7 ("One-way Quantum Key Distribution System Based on Planar Lightwave Circuit" written by Nambu and others, Japan Journal of Applied Physics, No. 45, Vol. 6A (published in 2006), pp. 5344-5348), and Patent Document 1 (Japanese Unexamined Patent Application Publication No. 2003-249928).

With the planar lightwave circuit technology, an unbalanced Mach-Zehnder interferometer is fabricated on a silicone substrate using an optical waveguide formed with patterning. Thus, a stable optical interferometer not affected by disturbance can be realized only by passive control such as temperature control, thereby providing an advantage wherein a low-noise system can be constructed.

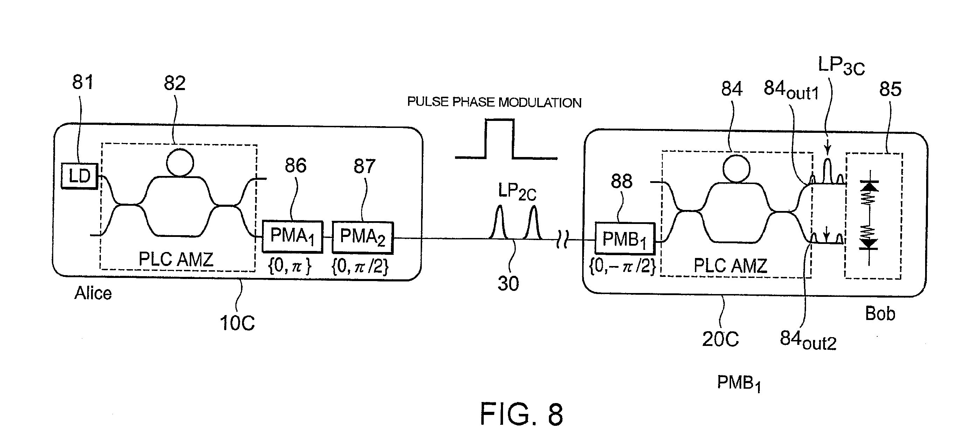

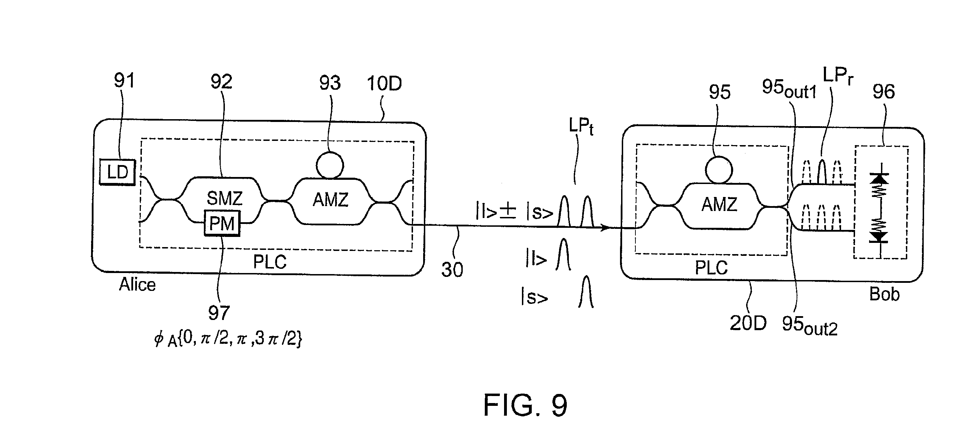

In the case of implementation employing the PLC, with the current technology, a low-loss unbalanced Mach-Zehnder interferometer including a phase modulator described above cannot be readily fabricated. Even though increase in cost is no problem, increase in optical loss of the reception-side device is directly connected to deterioration in performance of a quantum cryptography device employing attenuated light as information carriers, so this is an unacceptable problem. In order to solve this problem, a quantum cryptography device such as shown in Fig. 8 or Fig. 9 wherein a modulator is disposed outside an unbalanced Mach-Zehnder interferometer has been devised and developed.

With the quantum cryptography device shown in Fig. 8 which is known with Non-patent Document 7, attenuated short pulses generated at an attenuated laser light source 81 provided in a transmission unit 10C are input to an unbalanced Mach-Zehnder interferometer 82 made up of the PLC of the transmission unit 10C, thereby generating (preparing) coherent two-ream attenuated light pulses LP_{2C} spatially separated by the difference between long and short length optical paths thereof on the optical fiber transmission path 30.

The two-ream attenuated light pulses LP_{2C} are transmitted on the optical fiber transmission path 30. The two-ream attenuated light pulses LP_{2C} are converted into three-ream attenuated light pulses LP_{3C} by an unbalanced Mach-Zehnder interferometer 84 of a reception unit 20C, and output to two ports 84ₒᵤₜ₁ and 84ₒᵤₜ₂ on the downstream side. The presence of photons included in the central pulses of the three-ream attenuated light pulses LP_{3C} to be output to the two downstream ports 84ₒᵤₜ₁ and 84ₒᵤₜ₂ of the unbalanced Mach-Zehnder interferometer 84 is distinguished and recorded in a recording device (not shown).

A pulse-like modulation signal is applied to phase modulators 86 and 87 inserted serially on the downstream of the unbalanced Mach-Zehnder interferometer 82 of the transmission unit 10C in synchronism with the two-ream attenuated light pulses LP_{2C} passing through of each of the modulators, thereby selectively applying the four values of phase modulation of {0, π/2, π, 3π/2} to one pulse of the two-ream attenuated light pulses LP_{2C}, and applying the four values of modulation to the optical delay (relative phases) of the two-ream attenuated light pulses LP_{2C}.

A pulse-like modulation signal is applied to a phase modulator 88 inserted serially on the upstream of the unbalanced Mach-Zehnder interferomeer 84 of the reception unit 20C in synchronism with the two-ream attenuated light pulses LP_{2C} passing through the modulator, thereby selectively applying the two values of phase modulation of {0, π/2} to one pulse of the two-ream attenuated light pulses LP_{2C}. Thus, the two values of modulation are applied to the optical delay (relative phases) of the two-ream attenuated light pulses LP_{2C}.

The optical delay of the unbalanced Mach-Zehnder interferometers 82 and 84 is adjusted, thereby executing a quantum cryptographic key distribution protocol employing nonorthogonal four states proposed in Non-patent Document 1 in the same way as with the quantum cryptography device shown in Fig. 7, and accordingly, safe key distribution can be performed.

On the other hand, with the quantum cryptography device shown in Fig. 9 which has been known in Non-patent Document 5 and Patent Document 1, attenuated short light pulses generated at the attenuated laser light source 91 provided in a transmission device 10D are input to a balanced Mach-Zehnder interferometer 92 and an unbalanced Mach-Zehnder interferometer 93 connected thereto in a cascade manner, which are made up of the PLC on the transmission side, thereby generating (preparing) coherent two-ream attenuated light pulses spatially separated by the difference between long and short length optical paths of the unbalanced Mach-Zehnder interferometer 93 or either leading or delay attenuated pulse LPt serving as components thereof on the optical fiber transmission path 30.

These attenuated light pulses LPt are transmitted onto the optical fiber transmission path 30, pass through an unbalanced Mach-Zehnder interferometer 95 of a reception device 20D, following which photon time of arrival to two ports 95ₒᵤₜ₁ and 95ₒᵤₜ₂ on the downstream side thereof is observed by a photon detector 96 which operates in synchronism with the transmission device 10D, and a distinguishing and recording device (not shown) distinguishes and records which has been employed of three time slots separated by the time worth equivalent to the difference between long and short length optical paths.

A phase modulator 97 is inserted into one optical path of the balanced Mach-Zehnder interferometer 92 of the transmission device 10D, and the attenuated pulses input from the attenuated laser light source 91 receives the phase modulation selected from the four values of {0, π/2, π, 3π/2}.

In the case of the phase modulation to be applied being {0, π}, light pulses propagate only the long length or short length of the unbalanced Mach-Zehnder interferometer 93, one of the forward and backward light pulses LPt is generated (prepared) on the optical fiber transmission path 30 depending on the value of phase modulation.

In the case of the phase modulation to be applied being {π/2, 3π/2}, the attenuated light pulses propagate both of the long length and short length of the unbalanced Mach-Zehnder interferometer 93, the coherent two-ream pulses LPt of which the relative phase varies by π depending on the value of phase modulation are generated (prepared) on the optical fiber transmission path 30.

The optical delay at the unbalanced Mach-Zehnder interferometers 93 and 95 is appropriately adjusted such that in the case of the value of phase modulation at the phase modulator 97 being {0, π}, the output port of photons emerging in the central time slot is correlated with the value of the phase modulation, and in the case of the value of phase modulation at the phase modulator 97 being {π/2, 3π/2}, the output port of photons emerging in the first and third time slots is correlated with the value of the phase modulation, thereby executing a quantum cryptographic key distribution protocol employing nonorthogonal four states proposed in Non-patent Document 1, and accordingly, safe key distribution can be performed.

### Quantum Cryptography Device Employing Quantum Correlation Photon Pair

Next, description will be made regarding a quantum cryptography device employing a quantum correlation photon pair instead of coherent attenuated pulses serving as quantum bit carriers. With this method, though the device configuration is more complicated, high safety is guaranteed, so study has been performed energetically toward the practical use. Methods employing a quantum correlation photon pair include a method employing a pulse laser as a light source, and a method employing a continuous-wave laser as a light source, and each of the methods will be described below in detail.

### Quantum Cryptography Device Employing Quantum Correlation Photon Pair by Pulse Laser

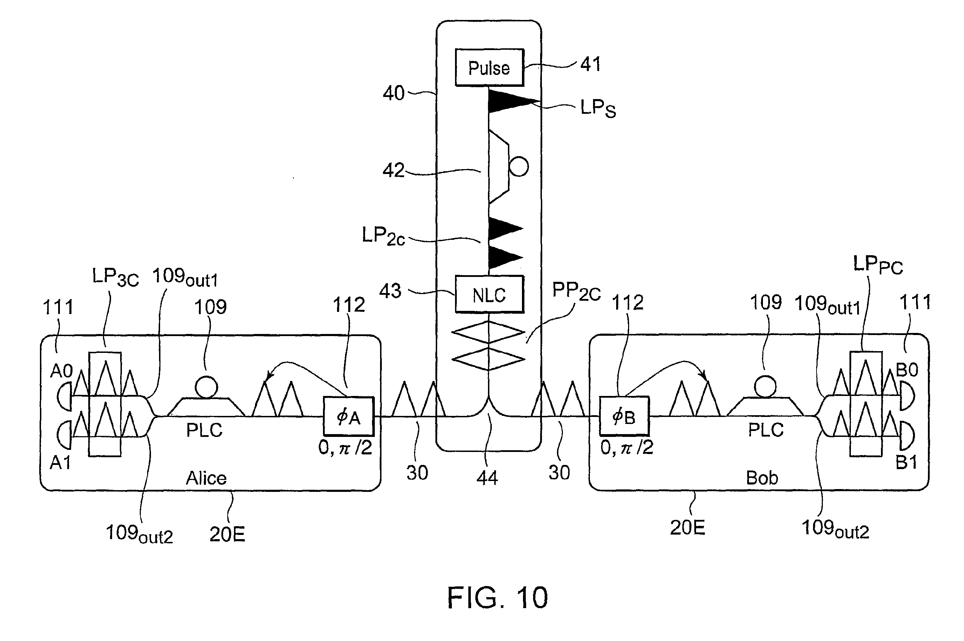

Fig. 10 illustrates a quantum cryptography device employing a quantum correlation photon pair described in Non-patent Document 8 ("Quantum cryptography without Bell's theorem" written by Bennet and others, Physical Review Letters, No. 68 (published in 1992), pp. 557-559).

With the quantum cryptography device shown in Fig. 10, an arrangement is made wherein the quantum correlation photon pair generated at the photon pair generating source 40 disposed in the center is distributed to two reception devices 20E by the optical fiber transmission path 30, and each of the pair is analyzed by a PLC unbalanced Mach-Zehnder interfrometer 109 included in the reception device 20E.

The short light pulses LPs from the pulse laser light source 41 provided in the photon pair generating source 40 are input to the unbalanced Mach-Zehnder interferometer 42, thereby generating (preparing) coherent two-ream light pulses LP_{2C} spatially separated by the difference between long and short length optical paths thereof.

The two-ream light pulses LP_{2C} are input to a nonlinear optical crystal 43, and each of the pulses is divided into two light pluses PP_{2C} according to parametric down-conversion. The wavelength of the photon pair PP_{2C} after this division becomes double the wavelength thereof before this division according to the law of energy conservation, and the mutual wavelength and division timing have quantum-mechanical correlation. The two-ream quantum correlation photon pair PP_{2C} thus generated is branched at a beam splitter 44, and distributed to the two reception devices 20E by the optical fiber transmission path 30.

The two-ream quantum correlation photon pair PP_{2C} are converted into three-ream pulse-like photon output LP_{3C} by an unbalanced Mach-Zehnder interferometer 109 included in both reception devices 20E, and are output to two ports 109ₒᵤₜ₁ and 109ₒᵤₜ₂ on the downstream side. The presence of a photon included in central light pulses of the three-ream pulse-like photon output LP_{3C} to be output to the two downstream ports 109ₒᵤₜ₁ and 109ₒᵤₜ₂ of the unblanced Mach-Zehnder interfrometer 109 is distinguished and recorded in a recording device (not shown) by photon detectors 111.

Of the three-ream pulse-like photon output LP_{3C}, light pulses which contribute to the central light pulses are light pulses passing through the long length of the unbalanced Mach-Zehnder interferometer 42 with the photon pair generating source 40 and passing through the short length of the unblalanced Mach-Zehnder interferometer 109 with the reception unit 20E, and light pulses passing through the short length of the unbalanced Mach-Zehnder interferometer 42 with the photon pair generating device 40 and passing through the long length of the unbalanced Mach-Zehnder interferometer 109 with the reception unit 20E. As a result thereof, the simultaneous photon detection probability of the two output ports by both reception devices 20E according to interference of these two contributions depends on the optical delay (relative phases) of the two-ream quantum correlation photon pair PP_{2C} in a sinusoidal function manner.

With this optical interference system, modulation is applied to the optical delay (relative phases) of the two-ream quantum correlation photon pair PP_{2C}, whereby cryptographic key distribution can be performed based on the principle of quantum cryptography. In order to realize this, a pulse-like modulation signal is applied to a phase modulator 112 inserted into the upstream of the unbalanced Mach-Zehnder interferometer 109 of both reception devices 20E serially in synchronism with the two-ream quantum correlation photon pair PP_{2C} passing through the modulator, thereby selectively applying the two values of phase modulation of {0, π/2} to one pulse of the two-ream quantum correlation photon pair PP_{2C}, and applying the two values of modulation to the optical delay (relative phases) of the two-ream quantum correlation photon pair PP_{2C}.

Optical delay at the unbalanced Mach-Zehnder interferometer 109 of both reception devices 20E is appropriately adjusted, thereby executing a quantum cryptographic key distribution protocol employing nonorthogonal four states proposed in Non-patent Document 8, and enabling safe key distribution to be performed.

### Quantum Cryptography Device Employing Quantum Correlation Photon Pair by Continuous-wave Laser

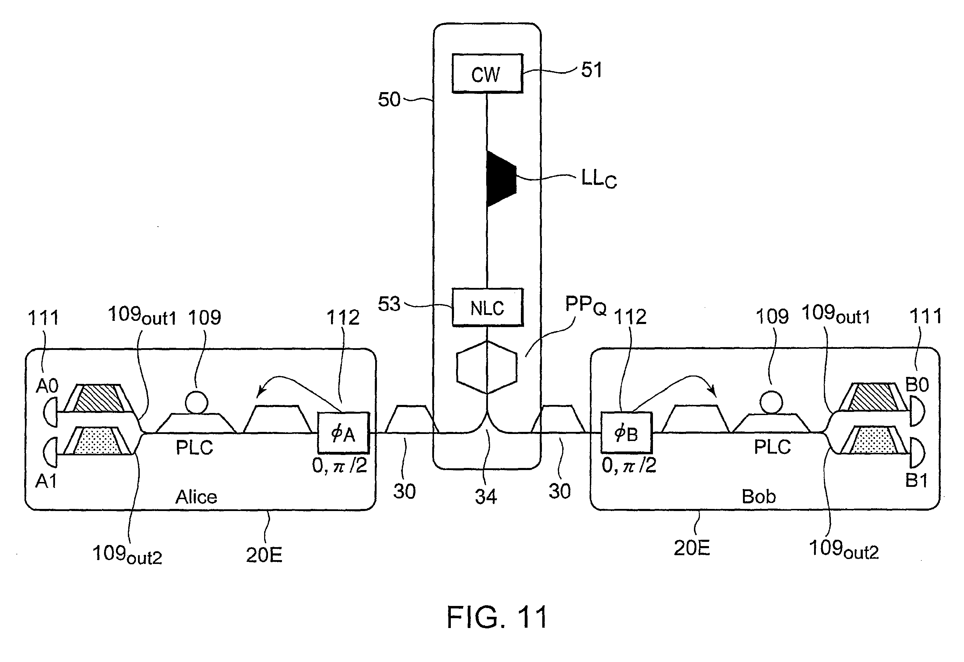

Fig. 11 illustrates a quantum cryptography device employing a quantum correlation photon pair described in Non-patent Document 8.

The brief configuration of the illustrated quantum encryption device is similar as that shown in the above-mentioned Fig. 10, but differs from the quantum cryptography device illustrated in Fig. 10 in that a continuous-wave laser is employed instead of a pulse laser as a light source and in that no unbalanded Mach-Zehnder interferometer immediately before nonlinear optical crystal is needed. With the continuous laser light LL_{C} from a continuous-wave laser light source 51 provided in the photon pair generating source 50, any point is mutually coherent within the coherence time thereof, and has clear phase relation.

Accordingly, this continuous-wave laser light LL_{C} is equivalent to the coherent two-ream light pulses LP_{2C} with the quantum cryptography device by the above-mentioned pulse laser illustrated in Fig. 10, and this case is not in a two-ream state but in an infinite-ream state. This laser light LL_{C} is input to a nonlinear optical crystal 53, and is divided into two photons PP_{Q} by parametrical down-conversion.

As described above, the photon pair PP_{Q} after this division has a quantum-mechanical correlation. The quantum correlation photon pair PP_{Q} thus generated is branched at the beam splitter 54 and distributed to both reception devices 20E by the optical fiber transmission path 30.

The quantum correlation photon pair PP_{Q} receives turbulence during transmission on the optical fiber transmission path 30, but the relative phaase relation and the relation of polarization planes within coherence time are saved. The quantum correlation photon pair PP_{Q} is once branched by the unbalanced Mach-Zehnder interferometer 109 each included in the two reception devices 20E, following which is multiplexed again by receiving delay equivalent to the difference between long and short length optical paths thereof, and output to the two ports 109ₒᵤₜ₁ and 109ₒᵤₜ₂ on the downstream side.

The presence of a photon to be output to the two downstream ports 109ₒᵤₜ₁ and 109ₒᵤₜ₂ of the unbalanced Mach-Zehnder interferometer 109 is distinguished by the photon detectors 111, and is recorded in a recording device (not shown).

With the quantum cryptography device by the above-mentioned pulse laser illustrated in Fig. 10, only the central light pulses are detected of the three-ream pulse-like photon output LP_{3C}, but in the case of the quantum cryptography device by the continuous-wave laser shown in Fig. 11, interference by overlapping is realized at any point of laser light, so detection can be performed at arbitrary timing.

According to this interference, the simultaneous photon detection probability of the two output ports by both reception devices 20E depends on the optical delay (relative phases) of the quantum correlation photon pair PP_{Q} in the unbalanced Mach-Zehnder interferometer 109 in a sinusoidal function fashion. This quantum mechanical interference is utilized, i.e., the phase modulator 112 serially inserted into the upstream of the unbalanced Mach-Zehnder interfrometer 109 of both reception devices 20E is employed in the same way in the case of the quantum cryptography device employing the correlation photon pair PP_{2C} by the above-mentioned pulse laser shown in Fig. 10, thereby executing a quantum cryptographic key distribution protocol employing nonorthogonal four states proposed in Non-patent Document 8, and accordingly, safe key distribution can be performed.

The quantum cryptography device employing the above-mentioned PLC is confirmed to have functioned, but active modulation by a phase modulator is needed to execute a quantum cryptographic key distribution protocol, and bias control for safe control of the phase modulator is also needed, and consequently, the device has become complicated.

Also, a so-called Trojan horse type attack, wherein an eavesdropper wire-taps the value of phase modulation of a modulator by introducing a probe light externally, is theoretically possible, which poses a problem in that safety guarantee as to such a type of attack cannot be obtained.

The quantum cryptography devices disclosed in the above-mentioned Non-patent Documents 1 through 4, 5 through 7, and 8, and Patent Document 1 include problems such as described above.

In brief, the quantum cryptography devices by phase coding which is the related art shown in Non-patent Documents 1 through 4 need to maintain the relative difference of the optical path length of the two unbalanced Mach-Zehnder interferometers for long time, and accordingly, an active control device is needed, which complicates the devices.

This problem can be avoided by the two unbalanced Mach-Zehnder interferometers being configured of the PLC, such as shown in Non-patent Documents 5 through 7 and Patent Document 1, but this requires an active signal modulation device and the control system thereof, and accordingly, the device is complicated.

That is to say, regardless of which implementation method including the quantum cryptography device disclosed in Non-patent Document 8 is selected, complication of the device cannot be readily avoided. Also, with each method, active signal modulation is performed, leaving the risk of a Trojan horse type attack by an eavesdropper.

### Disclosure of Invention

The present invention has been made in light of the problems held by the above-mentioned related art, and the object thereof is to provide a quantum cryptography transmission system wherein a device to be possessed by a regular user can have a more simple configuration than that of the related art, and also includes no risk of a Trojan horse type attack by an eavesdropper, and an optical circuit employed therewith. An optical circuit according to the present invention is characterized so as to include an unbalanced Mach-Zehnder interferometer including an optical delay circuit in one arm thereof, and means for applying propagation delay equivalent to the propagation length of the optical delay circuit between photons for propagating a different port.

According to a first aspect of the present invention, the optical circuit comprises an unbalanced Mach-Zehnder interferometer including an optical delay circuit in one arm thereof; an unbalanced optical delay circuit wherein an optical path including an optical delay circuit having equal propagation length to that of the optical delay circuit and an optical path not including the optical delay circuit are combined with a 3-dB coupler; and a 3-dB coupler configured to connect them to a common transmission path. According to a second aspect of the present invention, the optical circuit comprises an unbalanced Mach-Zehnder interfrometer including an optical delay circuit in one arm thereof; and two 3-dB couplers to be connected to the two arms of the unbalanced Mach-Zehnder interferometer.

According to the present invention, the configuration of a device to be possessed by a regular user can be simplified, and handling thereof can be readily performed. Accordingly, economic and technologic burden for the device of a regular user and operation of the device can be extremely reduced as compared to the quantum cryptography devices disclosed in Non-patent Documents 1 through 8 and Patent Document 1. Simultaneously, a quantum cryptography device having safety as to a Trojan horse type attack can be provided.

### Brief Description of the Drawings

Fig. 1 is a configuration diagram illustrating a quantum cryptography transmission system according to a first embodiment of the present invention.
Fig. 2 is a configuration diagram illustrating a quantum cryptography transmission system according to a second embodiment of the present invention.
Fig. 3 is a configuration diagram illustrating a quantum cryptography transmission system according to a third embodiment of the present invention.
Fig. 4 is a configuration diagram illustrating a quantum cryptography transmission system according to a fourth embodiment of the present invention.
Fig. 5 is a configuration diagram illustrating a quantum cryptography transmission system according to a fifth embodiment of the present invention.
Fig. 6 is a configuration diagram illustrating a quantum cryptography transmission system according to a sixth embodiment of the present invention.
Fig. 7 is a configuration diagram illustrating a first quantum crypgotaphy device according to the related art employing coherent attenuated light pulses.
Fig. 8 is a configuration diagram illustrating a second quantum cryptogaphy device according to the related art employing coherent sttenuated light pulses.
Fig. 9 is a configuration diagram illustrating a third quantum cryptogarphy device according to the related art employing coherent weak attenuated pulses.
Fig. 10 is a configuration diagram illustrating a fourth quantum cryptography device according to the related art employing a quantum correlation photon pair.
Fig. 11 is a configuration diagram illustrating a fifth quantum cryptography device according to the related art employing a quantum correlation photon pair.

### Best Mode for Carrying Out the Invention

Embodiments of the present invention will be described below in detail with reference to the drawings. With first and second embodiments of the present invention, description will be made regarding a case wherein the present invention is implemented using coherent attenuated light pulses. Also, with third through sixth embodiments of the present invention, description will be made regarding a case wherein the present invention is implemented using a quantum correlation photon pair.

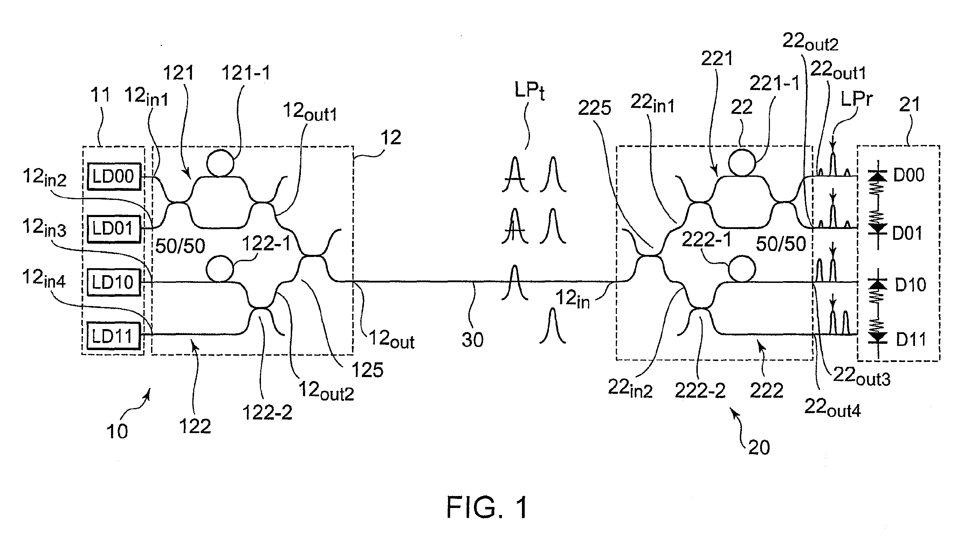

Fig. 1 is a configuration diagram illustrating a quantum cryptography transmission system according to a first embodiment of the present invention. The illustrated quantum cryptography transmission system is configured of a quantum cryptography transmission device 10, a quantum cryptography reception device 20, and an optical fiber transmission path 30 connecting between these.

The quantum cryptography transmission device 10 is configured of a light emitting unit 11 consisting of first through fourth weak laser light sources LD00, LD01, LD10, and LD11, and a transmission-side optical circuit 12. The first through fourth light sources LD00 through LD11 generate first through fourth photons serving as quantum bit information carriers, respectively. In the example being illustrated, the light emitting unit 11 is configured of the first through fourth light sources LD00 through LD11, but it goes without saying that the present invention is not restricted to this. Regardless, all that is required for the light emitting unit 11 is that the light emitting unit 11 has a configuration to selectively generate the first through fourth photons serving as quantum bit information carriers.

The transmission-side optical circuit 12 has first through fourth transmission-side input ports 12ᵢₙ₁, 12ᵢₙ₂, 12ᵢₙ₃, and 12ᵢₙ₄ which input the first through fourth photons respectively, and one transmission-side output port 12ₒᵤₜ connected to the transmission path 30. The transmission-side optical circuit 12 is configured of a transmission-side unbalanced Mach-Zehnder interferometer 121, a transmission-side unbalanced optical delay circuit 122, and a transmission-side 3-dB coupler 125. The transmission-side unbalanced Mach-Zehnder interferometer 121 includes a first transmission-side optical delay circuit 121-1 on one arm thereof. The transmission-side unbalanced optical delay circuit 122 is a circuit which combines an optical path including a second transmission-side optical delay circuit 122-1 having equal propagation length to that of the first transmission-side optical delay circuit 121-1 and an optical path not including the second transmission-side optical delay circuit using a 3-dB coupler 122-2. The transmission-side 3-dB coupler 125 combines the transmission-side unbalanced Mach-Zehnder interferometer 121 and the transmission-side unbalanced optical delay circuit 122 with the common transmission path 30. Now, the transmission-side unbalanced optical delay circuit 122 serves as means for applying propagation delay equivalent to the propagation length of the first transmission-side optical delay circuit 121-1 between photons for propagating a different port.

Specifically, the transmission optical circuit 12 is configured of the transmission-side unbalanced Mach-Zehnder interferometer 121 having a first output port 12ₒᵤₜ₁, which is connected to the first and second transmission-side input ports 12ᵢₙ₁ and 12ᵢₙ₂, the transmission-side unbalanced optical delay circuit 122 having a second output port 12ₒᵤₜ₂, which is connected to the third and fourth transmission-side input ports 12ᵢₙ₃ and 12ᵢₙ₄, and the transmission-side 3-dB coupler 125 for combining the first output port 12ₒᵤₜ₁ and second output port 12ₒᵤₜ₂ with the transmission-side output port 12ₒᵤₜ. That is to say, the transmission-side optical circuit 12 has a configuration wherein the transmission-side unbalanced Mach-Zehnder interferometer 121 and the transmission-side unbalanced optical delay circuit 122 are connected in parallel. The transmission-side unbalanced optical delay circuit 122 is configured of an optical waveguide including a set of long length and short length optical paths. The second transmission-side optical delay circuit 122-1 is formed in the long-length optical path of the transmission-side unbalanced optical delay circuit 122. The first transmission-side optical delay circuit 121-1 is formed in one arm (long-length optical path) of the transmission-side unbalanced Mach-Zehnder interferometer 121.

The quantum cryptography reception device 20 is configured of a light receiving unit 21 consisting of the first through fourth photon detectors D00, D01, D10, and D11, and a reception-side optical circuit 22 provided between the transmission path 30 and light receiving unit 21. In the example being illustrated, the light receiving unit 21 is configured of the first through fourth photon detectors D00 through D11, but it goes without saying that the present invention is not restricted to this. The light receiving unit 21 is a unit for detecting the presence of arrival of a photon serving as a quantum bit information carrier.

The illustrated reception-side optical circuit 22 is provided so as to become a symmetric system as to the above-mentioned transmission-side optical circuit 12. That is to say, the reception-side optical circuit 22 has one reception-side input port 22ᵢₙ connected to the transmission path 30, and first through fourth reception-side output ports 22ₒᵤₜ₁, 22ₒᵤₜ₂, 22ₒᵤₜ₃, and 22ₒᵤₜ₄. The light receiving unit 21 is connected to the first through fourth reception-side output ports 22ₒᵤₜ₁ through 22ₒᵤₜ₄. The reception-side optical circuit 22 is configured of a reception-side unbalanced Mach-Zehnder interferometer 221, a reception-side unbalanced optical delay circuit 222, and a reception-side 3-dB coupler 225. The reception-side unbalanced Mach-Zehnder interferometer 221 includes a first reception-side optical delay circuit 221-1 in one arm thereof. The reception-side unbalanced optical delay circuit 222 is a circuit which combines an optical path including a second reception-side optical delay circuit 222-1 having equal propagation length to that of the first reception-side optical delay circuit 221-1 and an optical path not including the second reception-side optical delay circuit using a 3-dB coupler 222-2. The reception-side 3-dB coupler 225 combines the reception-side unbalanced Mach-Zehnder interferometer 221 and the reception-side unbalanced optical delay circuit 222 with the common transmission path 30. Now, the reception-side unbalanced optical delay circuit 222 serves as means for applying propagation delay equivalent to the propagation length of the first reception-side optical delay circuit 221-1 between photons for propagating a different port.

Specifically, the reception optical circuit 22 is configured of the reception-side unbalanced Mach-Zehnder interferometer 221 having a first input port 22ᵢₙ₁, which is connected to the first and second reception-side output ports 22ₒᵤₜ₁ and 22ₒᵤₜ₂, the reception-side unbalanced optical delay circuit 222 having a second input port 12ᵢₙ₂, which is connected to the third and fourth reception-side output ports 22ₒᵤₜ₃ and 22ₒᵤₜ₄, and the reception-side 3-dB coupler 225 for combining the first input port 22ᵢₙ₁ and second input port 22ᵢₙ₂ with the reception-side input port 22ᵢₙ. That is to say, the reception-side optical circuit 22 has a configuration wherein the reception-side unbalanced Mach-Zehnder interferometer 221 and the reception-side unbalanced optical delay circuit 222 are connected in parallel. The reception-side unbalanced optical delay circuit 222 is configured of an optical waveguide including a set of long length and short length optical paths. The second reception-side optical delay circuit 222-1 is formed in the long-length optical path of the reception-side unbalanced optical delay circuit 222. The first reception-side optical delay circuit 221-1 is formed in one arm (long-length optical path) of the reception-side unbalanced Mach-Zehnder interferometer 221.

The optical fiber transmission path 30, which connects between the quantum cryptography device 10 and the quantum cryptography device 20, transmits attenuated light serving as quantum information carriers.

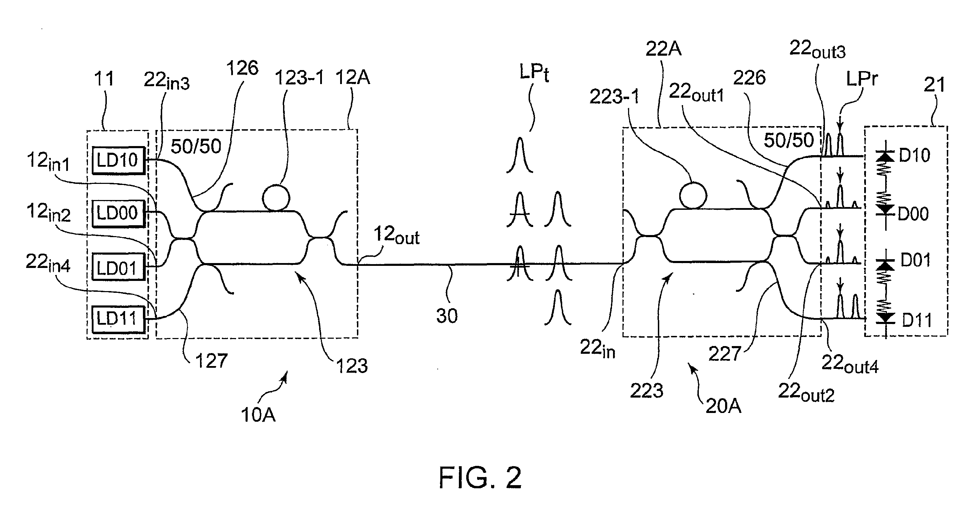

Fig. 2 is a configuration diagram illustrating a quantum cryptography transmission system according to a second embodiment of the present invention. The illustratred quantum cryptography transmission system is configured of a quantum cryptography transmission device 10A, a quantum cryptography reception device 20A, and an optical fiber transmission path 30 connecting between these.

The quantum cryptography transmission device 10A has the similar configuration as that of the quantum cryptography transmission device 10 shown in Fig. 1 except that the configuration of the transmission-side optical circuit differs from that shown in Fig. 1. Accordingly, the transmission-side optical circuit is denoted with reference numeral 12A.

The transmission-side optical circuit 12A is configured of a transmission-side unbalanced Mach-Zehnder interferometer 123 and two transmission-side 3-dB couplers 126 and 127 to be connected to the two arms of the transmission-side unbalanced Mach-Zehnder interferometer 123 respectively. The transmission-side unbalanced Mach-Zehnder interferometer 123 includes a transmission-side optical delay circuit 123-1 in one arm thereof. The two transmission-side 3-dB couplers 126 and 127 serve as means for applying propagation delay equivalent to the propagation length of the transmission-side optical delay circuit 123-1 between photons for propagating a different port.

Specifically, the transmission optical circuit 12A is configured of the transmission-side unbalanced Mach-Zehnder interferometer 123, which is connected to the first and second transmission-side input ports 12ᵢₙ₁ and 12ᵢₙ₂ and the transmission-side output port 12ₒᵤₜ, the first transmission-side 3-dB coupler (first optical waveguide) 126 connected to the third transmission-side input port 12ᵢₙ₃ and one arm (long-length optical path) of the transmission-side unbalanced Mach-Zehnder interferometer 123, and the second transmission-side 3-dB coupler (second optical waveguide) 127 connected to the fourth transmission-side input port 12ᵢₙ₄ and the other arm (short-length optical path) of the transmission-side unbalanced Mach-Zehnder interferometer 123. The transmission-side optical delay circuit 123-1 is formed in one arm (long-length optical path) of the transmission-side unbalanced Mach-Zehnder interferometer 123.

The quantum cryptography reception device 20A has the similar configuration as that of the quantum cryptography reception device 20 illustrated in Fig. 1 except that the configuration of the reception-side optical circuit differs from that shown in Fig. 1. Accordingly, the reception-side optical circuit is denoted with reference numeral 22A. The illustrated reception-side optical circuit 22A is provided so as to become a symmetric system as to the above-mentioned transmission-side optical circuit 12A.

That is to say, similar to the transmission-side optical circuit 12A, the reception-side optical circuit 22A is configured of a reception-side unbalanced Mach-Zehnder interferometer 223, and two reception-side 3-dB couplers 226 and 227 connecting to the two arms of the reception-side unbalanced Mach-Zehnder interferometer 223 respectively. The reception-side unbalanced Mach-Zehnder interferometer 223 includes a reception-side optical delay circuit 223-1 in one arm thereof. The two reception-side 3-dB couplers 226 and 227 serve as means for applying propagation delay equivalent to the propagation length of the reception-side optical delay circuit 223-1 between photons for propagating a different port.

Specifically, the reception-side optical circuit 22A is configured of the reception-side unbalanced Mach-Zehnder interferometer 223, which is connected to the first and second reception-side output ports 22ₒᵤₜ₁ and 22ₒᵤₜ₂ and the reception-side input port 22ᵢₙ, the first reception-side 3-dB coupler (first optical waveguide) 226 connected to the third reception-side output port 22ₒᵤₜ₃ and one arm (long-length optical path) of the reception-side unbalanced Mach-Zehnder interferometer 223, and the second reception-side 3-dB coupler (second optical waveguide) 227 connected to the fourth reception-side output port 22ₒᵤₜ₄ and the other arm (short-length optical path) of the reception-side unbalanced Mach-Zehnder interferometer 223. The reception-side optical delay circuit 223-1 is formed in one arm (long-length optical path) of the reception-side unbalanced Mach-Zehnder interferometer 223.

With the quantum cryptography transmission systems illustrated in Figs. 1 and 2, the optical circuits 12, 22, 12A, and 22A are configured of a planar light circuit, whereby a simple quantum cryptography transmission system can be configured without employing an active control device. However, the operation of the present embodiment does not depend on a method for implementing these devices. For example, a similar device can be configured with an optical fiber, or a hybrid configuration of a planar optical circuit and optical fiber. Even in the case of employing such a device, the functions of the quantum cryptography transmission systems according to the first and second embodiments of the present invention are not lost. Also, though not shown in Figs. 1 and 2, a personal computer is sufficient to be employed as the recording device of the quantum cryptography transmission device or quantum cryptogarphy reception device, and the Internet communication is sufficient to be employed as a classic communication path.

Description will be made sequentially below regarding the operations of the quantum cryptography transmission systems according to the first and second embodiments of the present invention with reference to the drawings.

First referring to Fig. 1, description will be made regarding the operation of the quantum cryptography transmission system according to the first embodiment of the present invention.

In Fig. 1, a regular sender selects one light source at random from the first through fourth attenuated laser light sources LD00, LD01, LD10, and LD11 for generating coherent light having the same wavelength λ, and attenuated short light pulses are output from the selected light source. It is assumed that the first attenuated laser light source LD00 or second attenuated laser light source LD01 is selected with the light emitting unit 11. In this case, the short light pulses input to the first and second transmission-side input ports 12ᵢₙ₁ and 12ᵢₙ₂ of the transmission-side optical circuit 12 are output onto the first output 12ₒᵤₜ₁ as coherent two-ream attenuated light pulses (two light pulses of which relative phase is clearly defined) of which the relative phase differs by π depending on the selection of the first and second transmission-side input ports 12ᵢₙ₁ and 12ᵢₙ₂.

On the other hand, it is assumed that the third attenuated laser light source LD10 or the fourth attenuated laser light source LD11 is selected with the light emitting unit 11. In this case, the waveguide length of the long-length or short-length optical path of the transmission-side unbalanced optical delay circuit 122 connected thereto respectively is appropriately adjusted, whereby either leading or delay attenuated light pulse of the relevant coherent two-ream attenuated light pulses can be prepared (generated) on the second output port 12ₒᵤₜ₂ in accordance with the selection of the third and fourth transmission-side input ports 12ᵢₙ₃ and 12ᵢₙ₄.

The first and second output ports 12ₒᵤₜ₁ and 12ₒᵤₜ₂ of these two optical circuits (transmission-side unbalanced Mach-Zehnder interferometer 121 and transmission-side unbalanced optical delay circuit 122) are connected to the transmission-side output port 12ₒᵤₜ of the common optical fiber transmission path 30 at the transmission-side 3-dB coupler 125, whereby coherent two-ream attenuated light pulses belonging to mutually conjugated basis system necessary for execution of a quantum cryptographic distribution protocol, or leading or delay attenuated light pulses LPt making up these can be selected at random in accordance with random selection of the first through fourth attenuated laser light sources LD00, LD01, LD10, and LD11, and prepared (generated) on the optical fiber transmission path 30.

On the other hand, the quantum cryptography reception device 20 includes the reception-side optical circuit 22 having the similar configuration as that of the transmission-side optical circuit 12 of the quantum cryptography transmission device 10. The first and second input ports 22ᵢₙ₁ and 22ᵢₙ₂ of the reception-side optical circuit 22 are connected to the reception-side input port 22ᵢₙ of the optical fiber transmission path 30 where attenuated light is transmitted at the optical coupler 225. The first through fourth reception-side output ports 22ₒᵤₜ₁, 22ₒᵤₜ₂, 22ₒᵤₜ₃, and 22ₒᵤₜ₄ of the reception-side optical circuit 22 are connected to the first through fourth photon detectors D00, D01, D10, and D11 of the light receiving unit 21, respectively.

The first through fourth photon detectors D00 through D11 of the light receiving unit 21 operate in synchronism with the quantum cryptography transmission device 10. Of the first through fourth photon detectors D00 through D11 of the light receiving unit 21, the first and the second photon detectors D00 and D01 detect the presence of a photon included in the central pulses of the three-ream pulse-like output PLr from the reception-side unbalanced Mach-Zehnder interferometer 221 of the reception-side optical circuit 22, the third photon detector D10 detects the presence of a photon included in the leading pulses of the two-ream pulse-like output PLr from the long-length optical waveguide of the reception-side unbalanced optical delay circuit 222 of the reception-side optical circuit 22, and the fourth photon detector D11 detects the presence of a photon included in the delay pulses of the two-ream pulse-like output PLr from the short-length optical waveguide of the reception-side unbalanced optical delay circuit 222 of the reception-side optical circuit 22.

Synchronization between the quantum cryptography transmission device 10 and the quantum cryptography reception device 20 is performed through a classic communication path (not shown). At this time, the transmission-side optical circuit 12 and reception-side optical circuit 22 can be controlled using a method such as temperature control such that the selected light source and the detector which detected a photon are correlated completely in a case wherein the selected light source at the light emitting unit 11 is {LD00 or LD01}, and also the detected photon at the light receiving unit 21 is {D00 or D01} (1/4 of whole event), and in a case wherein the selected light source at the light emitting unit 11 is {LD10 or LD11}, and also the detected photon at the light receiving unit 21 is {D10 or D11} (1/4 of whole event).

With regard to other combinations between the selected light source and detected photon other than those combinations, there is no correlation between both thoroughly, so the other combinations are not employed for generation of a secret key. The above-mentioned operation satisfies the necessary and sufficient conditions of a quantum cryptography device employing nonorthogonal four states, so a safe secret key can be shared between a sender and receiver unconditionally in accordance with the protocol proposed in Non-patent Document 1.

Specific procedures regarding this protocol will be described below. Following completion of transmission/reception of optical pulses, the sender exposes whether the selected light source at the light emitting unit 11 of the quantum cryptography transmission device 10 is {LD00 or LD01} or {LD10 or LD11} (this will be referred to as "transmitted basis") at a classic communication path to inform the receiver of this. At this time, the sender sets the bit value to be transmitted to "0" for {LD00 or LD01} or "1" for {LD10 or LD11}, whereby the third party cannot know the bit value from the exposed transmitted basis information alone.

Also, the receiver exposes whether the detected photon at the light receiving unit 21 of the quantum cryptography reception device 20 is {D00 or D01} or {D10 or D11} (this will be referred to as "received basis") in the same way to inform the sender of this. Which received basis is determined is determined passively depending on whether a photon advances which optical path at the reception-side 3-dB coupler 225 within the reception-side optical circuit 22 of the quantum cryptography reception device 20, i.e., determined completely at random.

Similarly, again, the receiver sets the bit value to be transmitted to "0" for {D00 or D01} or "1" for {D10 or D11}, whereby the third party cannot know the bit value from the exposed received basis information alone. Thus, only the transmitted and received bases are exposed, and the bits in a case wherein the transmitted basis does not correspond to the received basis (1/2 of whole event) are discarded.

In a case wherein the transmitted basis corresponds to the received basis (1/2 of whole event), the transmission-side optical circuit 12 and the reception-side optical circuit 22 can be adjusted such that the bit value selected by the sender is identical to the bit value selected by the receiver, so only the bit value in the case of the transmitted basis corresponding to the received basis is recorded, whereby a secret key can be shared safely between the sender and receiver.

Next, referring to Fig. 2, description will be made regarding the operation of the quantum cryptography transmission system according to the second embodiment of the present invention. In Fig. 2, a regular sender selects one light source at random from the first through fourth attenuated laser light sources LD00, LD01, LD10, and LD11 of the light emitting unit 11 for generating coherent light having the same wavelength λ, and attenuated short light pulses are emitted form the selected light source.

Now, it is assumed that the first attenuated laser light source LD00 or the second attenuated laser light source LD01 is selected at the light emitting unit 11. In this case, the short pulses input to the first and second transmission-side input ports 12ᵢₙ₁ and 12ᵢₙ₂ of the transmission-side optical circuit 12A become coherent two-ream attenuated light pulses (two light pulses of which the relative phase is clearly defined) of which the relative phase differs by π depending on the selection of the first and second transmission-side input ports 12ᵢₙ₁ and 12ᵢₙ₂, and are output onto the transmission-side output port 12ₒᵤₜ of the transmission-side optical circuit 12A.

On the other hand, it is assumed that the third attenuated laser light source LD10 or the fourth attenuated laser light source LD11 is selected at the light emitting unit 11. In this case, either leading or delay attenuated light pulse of the coherent two-ream attenuated light pulses can be generated (prepared) on the transmission-side output port 12ₒᵤₜ in accordance with the selection of the third and fourth transmission-side input ports 12ᵢₙ₃ and 12ᵢₙ₄ of the transmission-side optical circuit 12A.

Coherent two-ream attenuated light pulses belonging to mutually conjugated basis system necessary for execution of a quantum cryptographic distribution protocol, or leading or delay attenuated light pulses LPt making up these can be selected at random in accordance with random selection of the first through fourth attenuated laser light sources LD00 through LD11 at the light emitting unit 11, and prepared (generated) on the optical fiber transmission path 30.

On the other hand, the quantum cryptography reception device 20A includes the reception-side optical circuit 22A having the similar configuration as that of the transmission-side optical circuit 12A of the quantum cryptography transmission device 10A. The reception-side input port 22ᵢₙ of the reception-side optical circuit 22A is connected to the optical fiber transmission path 30 for transmitting attenuated light. The first through fourth reception-side output ports 22ₒᵤₜ₁, 22ₒᵤₜ₂, 22ₒᵤₜ₃, and 22ₒᵤₜ₄ of the reception-side optical circuit 22A are connected to the first through fourth photon detectors D00, D01, D10, and D11 of the light receiving unit 21, respectively.

The first through fourth photon detectors D00 through D11 of the light receiving unit 21 operate in synchronism with the quantum cryptography transmission device 10A. Of the first through fourth photon detectors D00 through D11 of the light receiving unit 21, the first and second photon detectors D00 and D01 detect the presence of a photon included in the central pulses of the three-ream pulse-like output LPr from the reception-side unbalanced Mach-Zehnder interfrometer 223 of the reception-side optical circuit 22A, the third photon detector D10 detects the presence of a photon included in the leading pulses of the two-ream pulse-like output LPr from the long-length optical waveguide of the reception-side unbalanced Mach-Zehnder interferometer 223 of the reception-side optical circuit 22A, and the fourth photon detector D11 detects the presence of a photon included in the delay pulses of the two-ream pulse-like output LPr from the short-length optical waveguide of the reception-side unbalanced Mach-Zehnder interferometer 223 of the reception-side optical circuit 22A.

Synchronization between the quantum cryptography transmission device 10A and the quantum cryptography reception device 20A is performed through a classic communication path (not shown). At this time, the transmission-side optical circuit 12A and reception-side optical circuit 22A can be controlled using a method such as temperature control such that the selected light source and the detector which detected a photon are correlated completely in a case wherein the selected light source at the light emitting unit 11 is {LD00 or LD01}, and also the detected photon at the light receiving unit 21 is {D00 or D01} (1/4 of whole event), and in a case wherein the selected light source at the light emitting unit 11 is {LD10 or LD11}, and also the detected photon at the light receiving unit 21 is {D10 or D11} (1/4 of whole event).

With regard to other combinations between the selected light source and detected photon other than those combinations, there is no correlation between both thoroughly, so the other combinations are not employed for generation of a secret key. The above-mentioned operation satisfies the necessary and sufficient conditions of a quantum cryptography device employing nonorthogonal four states, so a safe secret key can be shared between a sender and receiver unconditionally in accordance with the protocol proposed in Non-patent Document 1. The specific procedures of this protocol are generally the same as those described with the above-mentioned first embodiment, so description thereof will be omitted.

According to the configurations of the quantum cryptography transmission systems according to the first and second embodiments of the present invention, an extremely simple quantum cryptography transmission system can be provided wherein a signal modulation device is not needed with the quantum cryptography transmission device and the quantum cryptography reception device like the related art. Also, there is no active signal modulation, so even if an eavesdropper introduces a probe light externally, all information cannot be obtained, and accordingly, risk of a Trojan horse type attack can be eliminated.

With the present configuration, precise control of the optical circuits 12, 22, 12A, and 22A is needed, but this can be readily cleared by employing the PLC technology. The number of photon detectors is doubled, so noise due to darkcounts is doubled, but no modulator is necessary, and increase in noise can be generally cancelled by elimination of the optical loss thereof. Accordingly, with the present configuration, economic and technologic burden for the sake of the device of a regular user and operation of the device can be reduced extremely as compared to the quantum cryptography transmission systems disclosed in Non-patent Documents 1 through 7 and Patent Document 1.

Note that the quantum cryptography transmission system according to the first embodiment of the present invention illustrated in Fig. 1 includes the quantum cryptography transmission device 10 and the quantum cryptography reception device 20 which mutually make up a symmetric system, and the quantum cryptography transmission system according to the second embodiment of the present invention illustrated in Fig. 2 includes the quantum cryptography transmission device 10A and the quantum cryptography reception device 20A which mutually make up a symmetric system. Note however, with the quantum cryptography transmission system according to the present invention, the quantum cryptography transmission device and the quantum cryptography reception device which are mutually connected through the transmission path do not necessarily need to mutually make up a symmetric system. For example, the quantum cryptography transmission system may have a configuration wherein the quantum cryptography transmission device 10 and the quantum cryptography reception device 20A are connected to with the transmission path 30. Alternatively, the quantum cryptography transmission system may be a quantum cryptography transmission system wherein the quantum cryptography transmission device 10A and the quantum cryptography reception device 20 are connected to with the transmission path 30.

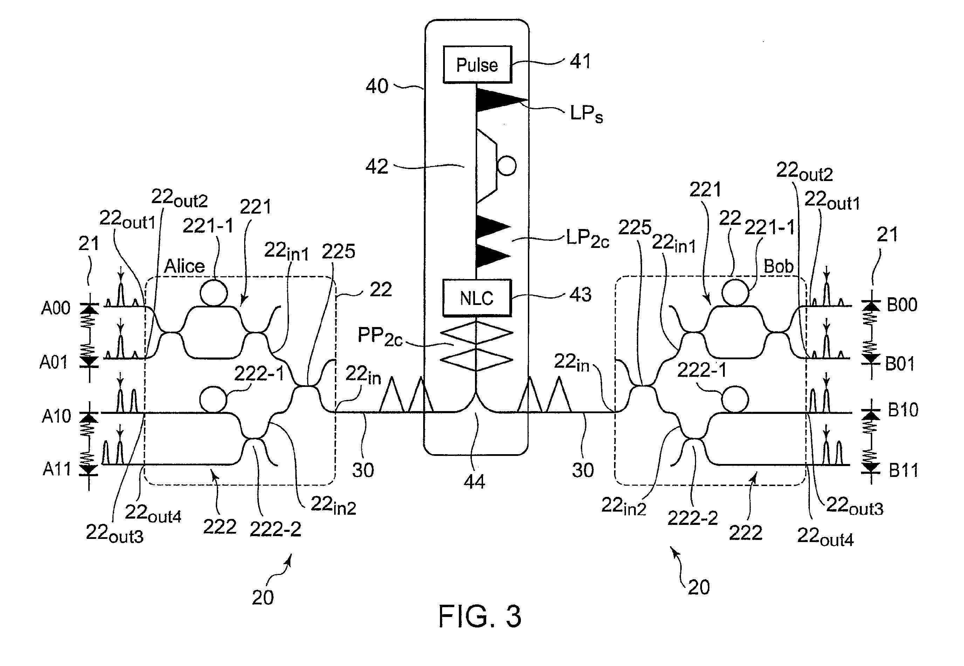

Fig. 3 is a configuration diagram illustrating a quantum cryptography transmission system according to a third embodiment of the present invention. The illustrated quantum cryptography transmission system is configured of a photon pair generating source 40 disposed in the center, and a pair of quantum cryptography reception devices 20 disposed on both sides thereof. The photon pair generating source 40 and each of the quantum cryptography reception devices 20 are connected with the optical fiber transmission path 30 for transmitting attenuated light.

Each of the quantum cryptography reception devices 20 has the similar configuration as that of the quantum cryptography reception device 20 illustrated in Fig. 1. That is to say, the quantum cryptography reception device 20 on the right side is configured of the reception-side optical circuit 22, and a light receiving unit 21 including first through fourth photon detectors A00, A01, A10, and A11. The quantum cryptography reception device 20 on the left side is configured of the reception-side optical circuit 22, and a light receiving unit 21 including first through fourth photon detectors B00, B01, B10, and B11.

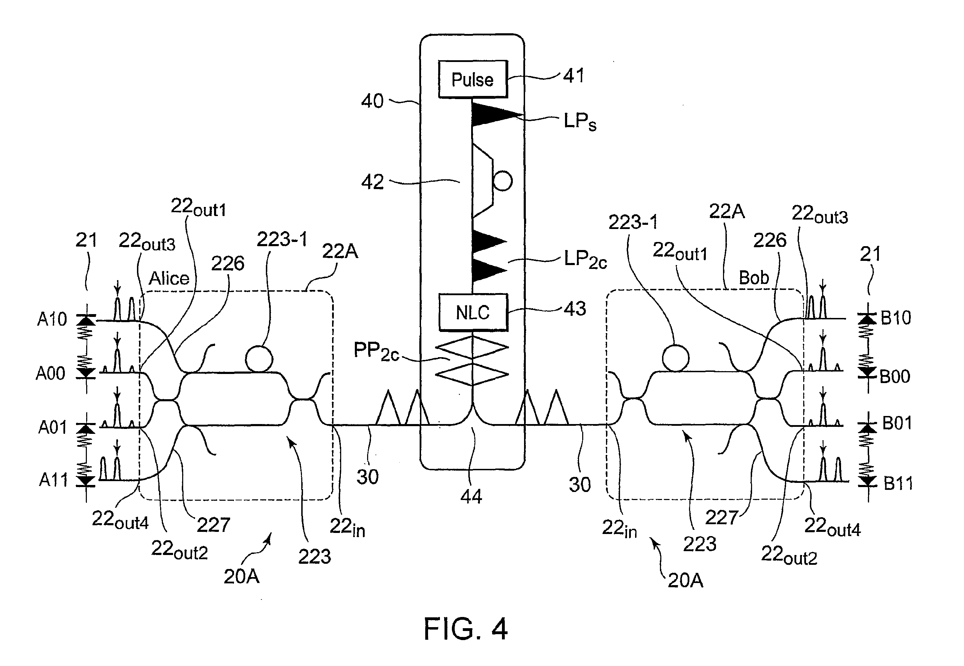

Fig. 4 is a configuration diagram illustrating a quantum crptography transmission system according to a fourth embodiment of the present invention. The illustrated quantum cryptography transmission system is configured of a photon pair generating source 40 disposed in the center, and a pair of quantum cryptography reception devices 20A disposed on both sides thereof. The photon pair generating source 40 and each of the quantum cryptography reception devices 20A are connected with an optical fiber transmission path 44 for transmitting attenuated light.

Each of the quantum cryptography reception devices 20A has the similar configuration as that of the quantum cryptography reception device 20A illustrated in Fig. 2. That is to say, the quantum cryptography reception device 20A on the right side is configured of the reception-side optical circuit 22A, and a light receiving unit 21 including first through fourth photon detectors A00, A01, A10, and A11. The quantum cryptography reception device 20A on the left side is configured of the reception-side optical circuit 22A, and a light receiving unit 21 including first through fourth photon detectors B00, B01, B10, and B11.

The reception-side optical circuits 22 and 22A which are components of the quantum cryptography reception devices 20 and 20A illustrated in Figs. 3 and 4 are configured of a planar light circuit, whereby a simple quantum cryptography transmission system can be configured without employing an active control device.

However, the operations of the third and fourth embodiments do not depend on a method for implementing these devices. For example, a similar device can be configured with an optical fiber, or a hybrid configuration of a planar optical circuit and optical fiber. Even in the case of employing such a device, the functions of the quantum cryptography transmission system according to the present embodiment are not lost.

Also, though not shown in Figs. 3 and 4, a personal computer is sufficient to be employed as the recording device of the respective quantum cryptography reception devices 20 and 20A, and the common Internet communication is sufficient to be employed as a classic communication path.

Also, in Figs. 3 and 4, the photon pair generating source 40 is illustrated so as to be disposed in a place separately from the quantum cryptography reception devices 20 and 20A both receivers possess, but this photon pair generating source 40 may be embedded in one of the quantum cryptography reception devices.

In the case of such a configuration, the distance from the photon pair generating source 40 to the light receiving units 21 included in both quantum cryptography reception devices become asymmetrical, and the arrival timing of a photon differs, but such a configuration can operate by synchronizing to which delay of the time difference thereof is applied.

In Figs. 3 and 4, the photon pair generating source 40 has the similar configuration as that of the photon pair generating source 40 illustrated in Fig. 10. That is to say, the photon pair generating source 40 is configured of a pulse laser light source 41 for emitting short light pulses LPₛ, an unbalanced Mach-Zehnder interfrometer 42, a nonlinear optical crystal 43, and a beam splitter 44.

Description will be made sequentially below regarding the operations of the quantum cryptography transmission systems according to the third and fourth embodiments of the present invention with reference to the drawings.

First, referring to Fig. 3, description will be made regarding the operation of the quantum cryptography transmission system according to the third embodiment of the present invention.

In Fig. 3, the short light pulses LPₛ from the pulse laser light source 41 provided in the photon pair generating source 40 are input to the unbalanced Mach-Zehnder interferometer 42, thereby generating (preparing) coherent two-ream pulses LP_{2c} spatially separated by the difference between long and short length optical paths thereof.

The two-ream light pulses LP_{2c} are input the nonlinear optical crystal 43, and each of the pulses is divided into two light pluses PP_{2C} according to a parametric down-conversion process. The photon pair PP_{2C} after this division has a quantum-mechanical correlation.

The two-ream quantum correlation photon pairs PP_{2C} thus generated are branched at the beam splitter 44, and are distributed to both quantum cryptography reception devices 20 by the optical fiber transmission path 30.

Each of the quantum encryption reception devices 20 includes the reception-side optical circuit 22. The first and second input ports 22ᵢₙ₁ and 22ᵢₙ₂ of the reception-side optical circuit 22 are connected to the reception-side input port 22ᵢₙ of the optical fiber transmission path 30 for transmitting attenuated light at the optical coupler 225. The first through fourth reception-side output ports 22ₒᵤₜ₁ through 22ₒᵤₜ₄ of the reception-side optical circuit 22 of the quantum cryptography reception device 20 on the left side are connected to the first through fourth photon detectors A00, A01, A10, and A11 of the light receiving unit 21, respectively. The first through fourth reception-side output ports 22ₒᵤₜ₁ through 22ₒᵤₜ₄ of the quantum crypgtoraphy reception-side optical circuit 22 on the right side are connected to the first through fourth photon detectors B00, B01, B10, and B11 of the light receiving unit 21, respectively.

The first through fourth photon detectors A00 through A11 or B00 through B11 of the light receiving unit 21 operate in synchronism with the photon pair generating source 31. Of the first through fourth photon detectors A00 through A11 or B00 through B11 of the light receiving unit 21 connected to the first through fourth reception-side output ports 22ₒᵤₜ₁ through 22ₒᵤₜ₄, the first and second photon detectors A00 and A01 or B00 and B01 detect the presence of a photon included in the central pulses of the three-ream pulse-like photon output from the reception-side unbalanced Mach-Zehnder interfrometer 221 of the reception-side optical circuit 22, the third photon detector A10 or B10 detects the presence of a photon included in the leading pulse of the two-ream pulse-like photon output from the long-length optical waveguide of the reception-side unbalanced optical delay circuit 222 of the reception-side optical circuit 22, and the fourth photon detector A11 or B11 detects the presence of a photon included in the delay pulse of the two-ream pulse-like photon output from the short-length optical waveguide of the reception-side unbalanced optical delay circuit 222 of the reception-side optical circuit 22.

Synchronization between the photon pair generating source 40 and both quantum cryptography reception devices 20 is performed through a classic communication path (not shown). At this time, the reception-side optical circuit 22 can be controlled using a method such as temperature control such that the detectors which detected a photon of both quantum cryptography reception devices 20 are correlated completely in a case wherein the detectors which detected a photon at the light receiving unit 21 included in both quantum cryptography reception devices 20 is {A00 or A01}, and also {B00 or B01} (1 /4 of whole event), and in a case wherein the detectors which detected a photon at the light receiving unit 21 included in both quantum cryptography reception devices 20 is {A10 or A11}, and also {B10 or B11} (1 /4 of whole event).

With regard to other combinations between the detectors which detected a photon other than those combinations, there is no correlation between both quantum cryptography reception devices 20 thoroughly, so the other combinations are not employed for generation of a secret key. The above-mentioned operation satisfies the necessary and sufficient conditions of a quantum cryptography device employing nonorthogonal four states, so a safe secret key can be shared between a sender and receiver unconditionally in accordance with the protocol proposed in Non-patent Document 8.

This protocol is basically generally the same as that described with the first embodiment of the present invention, but the difference between both is in that while the quantum cryptography transmission device 10 selects the basis bit value artificially with the quantum cryptography transmission system according to the first embodiment of the present invention shown in Fig. 1, with the quantum cryptography transmission system according to the third embodiment of the present invention, the basis bit values of both quantum cryptography reception devices 20 are determined passively by the optical coupler 225. The basis thus determined is exposed in a classic communication path, the bits not corresponding to the basis are discarded, and only the corresponding bit value is recorded, whereby a secret key can be shared safely.

Next, referring to Fig. 4, description will be made regarding the operation of the quantum cryptography transmission system according to the fourth embodiment of the present invention.

The operation until the two-ream quantum correlation photon pair PP_{2C} generated by the photon pair generating source 40 is distributed between both quantum cryptography reception devices 20A by the optical fiber transmission path 30 is similar as that of the quantum cryptography transmission system according to the third embodiment of the present invention described above.

Each of the quantum cryptography reception devices 20A includes the reception-side optical circuit 22A. The reception-side input port 22ᵢₙ of the reception-side optical circuit 22A is connected to the optical fiber transmission path 30 for transmitting attenuated light. The first through fourth reception-side output ports 22ₒᵤₜ₁ through 22ₒᵤₜ₄ of the reception-side optical circuit 22A of the quantum cryptography reception device 20A on the left side are connected to the first through fourth photon detectors A00, A01, A10, and A11 of the light receiving unit 21, respectively. The first through fourth reception-side output ports 22ₒᵤₜ₁ through 22ₒᵤₜ₄ of the reception-side optical circuit 22A of the quantum cryptography reception device 20A on the right side are connected to the first through fourth photon detectors B00, B01, B10, and B11 of the light receiving unit 21, respectively.

The first through fourth photon detectors A00 through A11 or B00 through B11 of the light receiving unit 21 operate in synchronism with the photon pair generating source 40. Of the first through fourth photon detectors A00 through A11 or B00 through B11 of the light receiving unit 21 connected to the first through fourth reception-side output ports 22ₒᵤₜ₁ through 22ₒᵤₜ₄, the first and second photon detectors A00 and A01 or B00 and B01 detect the presence of a photon included in the central pulses of the three-ream pulse-like photon output from the reception-side unbalanced Mach-Zehnder interferometer 223 of the reception-side optical circuit 22A, the third photon detector A10 or B10 detects the presence of a photon included in the leading pulse of the two-ream pulse-like photon output from the long-length optical waveguide of the reception-side unbalanced Mach-Zehnder interferometer 223 of the reception-side optical circuit 22A, and the fourth photon detector A11 or B11 detects the presence of a photon included in the delay pulse of the two-ream pulse-like photon output from the short-length optical waveguide of the reception-side unbalanced Mach-Zehnder interferometer 223 of the reception-side optical circuit 22A.

Synchronization between the photon pair generating source 40 and both quantum cryptography reception devices 20A is performed through a classic communication path (not shown). At this time, the reception-side optical circuit 22A can be controlled using a method such as temperature control such that the detectors which detected a photon of both quantum cryptography reception devices 20A are correlated completely in a case wherein the detectors which detected a photon at the light receiving unit 21 included in both quantum cryptography reception devices 20A is {A00 or A01}, and also {B00 or B01} (1 /4 of whole event), and in a case wherein the detectors which detected a photon at the light receiving unit 21 is {A10 or A11}, and also {B10 or B11} (1/4 of whole event).

With regard to other combinations between the detectors which detected a photon other than those combinations, there is no correlation between both quantum cryptography reception devices 20A thoroughly, so the other combinations are not employed for generation of a secret key. The above-mentioned operation satisfies the necessary and sufficient conditions of a quantum cryptography device employing nonorthogonal four states, so a safe secret key can be shared between a sender and receiver unconditionally in accordance with the protocol proposed in Non-patent Document 8.

The specific procedures of this protocol are generally the same as those described with the third embodiment of the present invention, so description thereof will be omitted.

According to the device configurations according to the third and fourth embodiments of the present invention, an extremely simple quantum cryptography transmission system can be provided wherein a signal modulation device is not needed with the reception device like the related art. Also, there is no active signal modulation, so even if an eavesdropper introduces a probe light externally, all information cannot be obtained, and accordingly, risk of a Trojan horse type attack can be eliminated.

With the present configuration, precise control of the reception-side optical circuits 22 and 22A is needed, but this can be readily cleared by employing the PLC technology. The number of photon detectors is doubled, so noise due to darkcounts is doubled, but no modulator is necessary, and increase in noise can be generally cancelled by elimination of the optical loss thereof.

Accordingly, with the present configuration, economic and technologic burden for the sake of the device of a regular user and operation of the device can be reduced extremely as compared to the quantum cryptography devices disclosed in Non-patent Documents 1 through 8 and Patent Document 1.

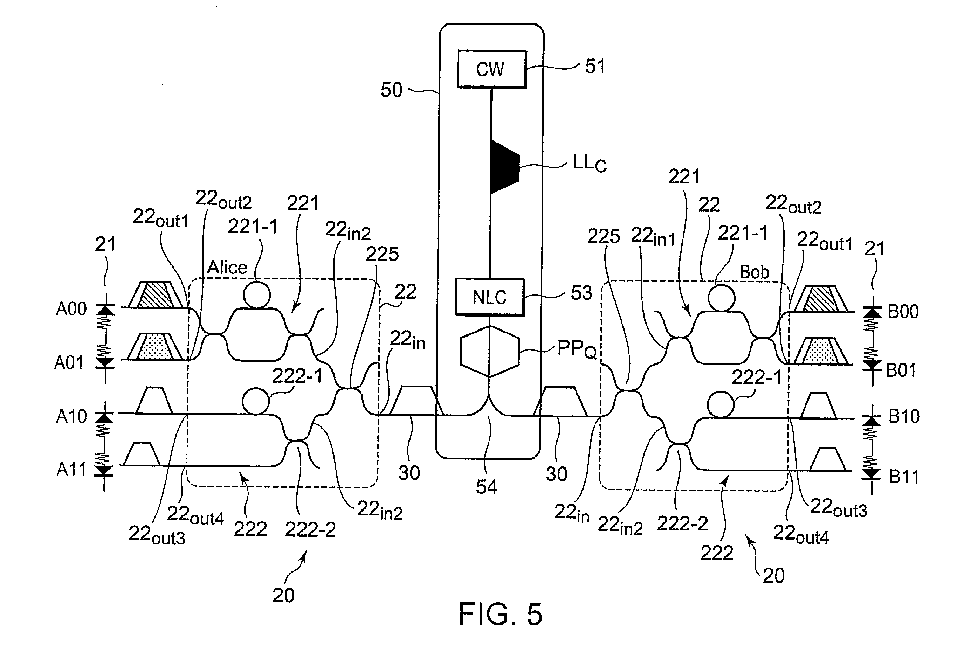

Fig. 5 is a configuration diagram illustrating a quantum cryptography transmission system according to a fifth embodiment of the present invention. The illustrated quantum cryptography transmission system is configured of a photon pair generating source 50 disposed in the center, and a pair of quantum cryptography reception devices 20 disposed on both sides thereof. The photon pair generating source 50 and each of the quantum cryptography reception devices 20 are connected with an optical fiber transmission path 30 for transmitting attenuated light. That is to say, the illustrated quantum cryptography transmission system has the similar configuration as that of the quantum cryptography transmission system according to the third embodiment of the present invention illustrated in Fig. 3 except that the photon pair generating source 50 is provided instead of the photon pair generating source 40. The photon pair generating source 50 has the similar configuration as that of the photon pair generating source 50 illustrated in Fig. 11.

The quantum cryptography reception device 20 on the left side is configured of a reception-side optical circuit 22, and light receiving unit 21 consisting of first through fourth photon detectors A00, A01, A10, and A11. The quantum cryptography reception device 20 on the right side is configured of a reception-side optical circuit 22, and light receiving unit 21 consisting of first through fourth photon detectors B00, B01, B10, and B11.

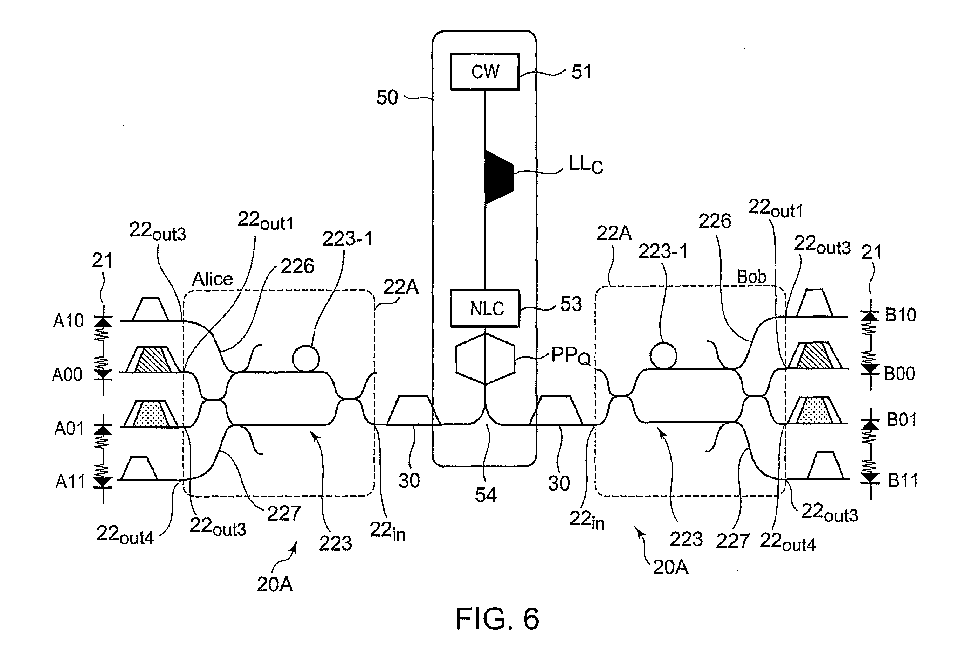

Fig. 6 is a configuration diagram illustrating a quantum cryptography transmission system according to a sixth embodiment of the present invention. The illustrated quantum cryptography transmission system is configured of a photon pair generating source 50 disposed in the center, and a pair of quantum cryptography reception devices 20A disposed on both sides thereof. The photon pair generating source 50 and each of the quantum cryptography reception devices 20A are connected with an optical fiber transmission path 30 for transmitting attenuated light. That is to say, the illustrated quantum cryptography transmission system has the similar configuration as that of the quantum cryptography transmission system according to the fourth embodiment of the present invention illustrated in Fig. 4 except that the photon pair generating source 50 is provided instead of the photon pair generating source 40. The photon pair generating source 50 has the similar configuration as that of the photon pair generating source 50 illustrated in Fig. 11.

The quantum cryptography reception device 20A on the left side is configured of a reception-side optical circuit 22A, and light receiving unit 21 consisting of first through fourth photon detectors A00, A01, A10, and A11. The quantum cryptography reception device 20A on the right side is configured of a reception-side optical circuit 22A, and light receiving unit 21 consisting of first through fourth photon detectors B00, B01, B10, and B11.

The reception-side optical circuits 22 and 22A which are components of the quantum cryptography reception devices 20 and 20A illustrated in Figs. 5 and 6 are configured of a planar light circuit, whereby a simple quantum cryptography transmission system can be configured without employing an active control device.

However, the operations of the fifth and sixth embodiments do not depend on a method for implementing these devices. For example, a similar device can be configured with an optical fiber, or a hybrid configuration of a planar optical circuit and optical fiber. Even in the case of employing such a device, the functions of the quantum cryptography transmission systems according to the fifth and sixth embodiment are not lost.

Also, though not shown in Figs. 5 and 6, a personal computer is sufficient to be employed as the recording device of the respective quantum cryptography reception devices 20 and 20A, and the common Internet communication is sufficient to be employed as a classic communication path.

Also, similar to the third and fourth embodiments of the present invention, the photon pair generating source 50 may be embedded in one of the quantum cryptography reception devices.

The photon pair generating source 50 is configured of a continuous-wave laser light source 51 for emitting continuous laser light LL_{C}, a nonlinear optical crystal 53 for generating quantum correlation photon pair PP_{Q} from the continuous laser light LL_{C}, and a beam splitter 54 for branching the quantum correlation photon pair PP_{Q}.

Description will be made sequentially below regarding the operations of the quantum cryptography transmission systems according to the fifth and sixth embodiments of the present invention with reference to the drawings.

First, referring to Fig. 5, description will be made regarding the operation of the quantum cryptography transmission system according to the third embodiment of the present invention.

In Fig. 5, with the continuous laser light LL_{C} from the continuous-wave laser light source 51 provided in the photon pair generating source 50, any point is mutually coherent within the coherence time thereof. Accordingly, this continuous-wave laser light LL_{C} is equivalent to the coherent two-ream light pulses LP_{2C} according to the third and fourth embodiments of the present invention, and this case is not in a two-ream state but in an infinite-ream state.

This laser light LL_{C} is input to the nonlinear optical crystal 53, and is divided into two photons PP_{Q} by parametrical down-conversion. The photon pair PP_{Q} after this division has a quantum-mechanical correlation.

The quantum correlation photon pair PP_{Q} thus generated is branched at the beam splitter 54, and distributed between both quantum cryptography reception devices 20 by the optical fiber transmission path 30.

Each of the quantum cryptography reception devices 20 includes the reception-side optical circuit 22. The first and second input ports 22ᵢₙ₁ and 22ᵢₙ₂ of the reception-side optical circuit 22 of the quantum cryptography reception devices 20 are connected to the reception-side input port 22ᵢₙ of the optical fiber transmission path 30 for transmitting attenuated light at the optical coupler 225. The first through fourth reception-side output ports 22ₒᵤₜ₁ through 22ₒᵤₜ₄ of the reception-side optical circuit 22 of the quantum cryptography reception device 20 on the right side are connected to the first through fourth photon detectors A00, A01, A10, and A11 of the light receiving unit 21, respectively. The first through fourth reception-side output ports 22ₒᵤₜ₁ through 22ₒᵤₜ₄ of the reception-side optical circuit 22 of the quantum cryptography reception device 20 on the left side are connected to the first through fourth photon detectors B00, B01, B10, and B11 of the light receiving unit 21, respectively.

The detector which detected a photon and the arrival timing thereof are recorded by the recording device (personal computer) connected to the light receiving unit 21. At this time, the reception-side optical circuit 22 can be controlled using a method such as temperature control such that the detectors which detected a photon of both quantum cryptography reception devices 20 are correlated completely in a case wherein {A00 or A01} and {B00 or B01} were detected simultaneously at the light receiving unit 21 included in both quantum cryptography reception devices 20 (1/4 of whole event), and in a case wherein {A10 or A11} and {B10 or B11} were detected simultaneously (1/4 of whole event).

With regard to other combinations between the detectors which detected a photon other than those combinations, there is no correlation between both quantum cryptography reception devices 20 thoroughly, so the other combinations are not employed for generation of a secret key.

The above-mentioned operation satisfies the necessary and sufficient conditions of a quantum crytography device employing nonorthogonal four states, so a safe secret key can be shared between a sender and receiver unconditionally in accordance with the protocol proposed in Non-patent Document 8. The specific procedures of this protocol are generally the same as those described with the above-mentioned third embodiment, so description thereof will be omitted.

Next, referring to Fig. 6, description will be made regarding the operation of the quantum cryptography transmission system according to the sixth embodiment of the present invention.

The operation until the two-ream quantum correlation photon pair PP_{Q} generated by the photon pair generating source 50 is distributed to both quantum cryptography reception devices 20A by the optical fiber transmission path 30 is the same as that according to the fifth embodiment of the present invention described above.

Each of the quantum cryptography reception devices 20A includes the reception-side optical circuit 22A. The reception-side input port 22ᵢₙ of the reception-side optical circuit 22A of each quantum cryptography reception device 20A is connected to the optical fiber transmission path 30 for transmitting attenuated light. The first through fourth reception-side output ports 22ₒᵤₜ₁ through 22ₒᵤₜ₄ of the reception-side optical circuit 22A of the quantum cryptography reception device 20A on the left side are connected to the first through fourth photon detectors A00, A01, A10, and A11 of the light receiving unit 21, respectively. The first through fourth reception-side output ports 22ₒᵤₜ₁ through 22ₒᵤₜ₄ of the reception-side optical circuit 22A of the quantum cryptography reception device 20A on the right side are connected to the first through fourth photon detectors B00, B01, B10, and B11 of the light receiving unit 21, respectively. The detector which detected a photon and the arrival timing thereof are recorded by the recording device (personal computer) connected to the light receiving unit 21.

At this time, the reception-side optical circuit 22A can be controlled using a method such as temperature control such that the detectors which detected a photon of both quantum cryptography reception devices 20A are correlated completely in a case wherein {A00 or A01} and {B00 or B01} were detected simultaneously at the light receiving unit 21 included in both quantum cryptography reception devices 20A (1/4 of whole event), and in a case wherein {A10 or A11} and {B10 or B11} were detected simultaneously (1/4 of whole event).

With regard to other combinations between the detectors which detected a photon other than those combinations, there is no correlation between both quantum cryptography reception devices 20A thoroughly, so the other combinations are not employed for generation of a secret key.

The above-mentioned operation satisfies the necessary and sufficient conditions of a quantum cryptography device employing nonorthogonal four states, so a safe secret key can be shared between a sender and receiver unconditionally in accordance with the protocol proposed in Non-patent Document 8. The specific procedures of this protocol are generally the same as those described with the above-mentioned third embodiment, so description thereof will be omitted.

According to the device configurations according to the fifth and sixth embodiments of the present invention, an extremely simple quantum cryptography transmission system can be provided wherein a signal modulation device is not needed with the reception device like the related art. Also, there is no active signal modulation, so even if an eavesdropper introduces a probe light externally, all information cannot be obtained, and accordingly, risk of a Trojan horse type attack can be eliminated.

With the present configuration, precise control of the reception-side optical circuits 22 and 22A is needed, but this can be readily cleared by employing the PLC technology. The number of photon detectors is doubled, so noise due to darkcounts is doubled, but no modulator is necessary, and increase in noise can be generally cancelled by elimination of the optical loss thereof.

Accordingly, with the present configuration, economic and technologic burden for the sake of the device of a regular user and operation of the device can be reduced extremely as compared to the quantum cryptography devices disclosed in Non-patent Documents 1 through 8 and Patent Document 1.

With the quantum cryptography transmission system according to the third embodiment of the present invention illustrated in Fig. 3, a pair of the quantum cryptography reception devices 20 having the similar configuration are disposed on both sides of the photon pair generating source 40 disposed in the center, and with the quantum cryptography transmission system according to the fourth embodiment of the present invention illustrated in Fig. 4, a pair of the quantum cryptography reception devices 20A having the similar configuration are disposed on both sides of the photon pair generating source 40 disposed in the center, and with the quantum cryptography transmission system according to the fifth embodiment of the present invention illustrated in Fig. 5, a pair of the quantum cryptography reception devices 20 having the similar configuration are disposed on both sides of the photon pair generating source 50 disposed in the center, and with the quantum cryptography transmission system according to the sixth embodiment of the present invention illustrated in Fig. 6, a pair of the quantum cryptography reception devices 20A having the similar configuration are disposed on both sides of the photon pair generating source 50 disposed in the center. That is to say, with the quantum cryptography transmission systems according to the third through the sixth embodiments, a pair of quantum cryptography reception devices having the similar configuration are disposed on both sides of a photon pair generating source disposed in the center.

Note however, with the quantum cryptography transmission system according to the present invention, a pair of quantum cryptography reception devices to be disposed on both sides of a photon pair generating source disposed in the center do not necessarily have the similar configuration, and may have a different configuration. For example, a quantum cryptography transmission system may have a configuration wherein the quantum cryptography reception device 20 is disposed on one side of the photon pair generating source 40 disposed in the center, and the quantum cryptography reception device 20A is disposed on the other side, or a quantum cryptography transmission system may have a configuration wherein the quantum cryptography reception device 20 is disposed on one side of the photon pair generating source 50 disposed in the center, and the quantum cryptography reception device 20A is disposed on the other side.

The present invention is not restricted to the above-mentioned embodiments, and it goes without saying that various modifications and changes can be made without departing from the essence (subject) of the present invention.

## Claims

1. An optical circuit (12; 12A; 22; 22A) comprising:
an unbalanced Mach-Zehnder interferometer (121; 123; 221; 223) including an optical delay circuit (121-1; 123-1; 221-1; 223-1) in one arm thereof; and
means configured to apply propagation delay equivalent to the propagation length of said optical delay circuit to between photons for propagating a different port.

2. The optical circuit according to Claim 1, said optical circuit (12; 22) comprising:
an unbalanced Mach-Zehnder interferometer (121; 221) including a first optical delay circuit (121-1; 221-1) in one arm thereof;
an unbalanced optical delay circuit (122; 222) wherein an optical path including a second optical delay circuit having the propagation length of said first optical delay circuit and an optical path not including said second optical delay circuit are combined with a 3-dB coupler (122-2; 222-2); and
a 3-dB coupler (125; 225) configured to connect them to a common transmission path.

3. The optical circuit according to Claim 1, said optical circuit (12A; 22A) comprising:
an unbalanced Mach-Zehnder interferometer (123; 223) including a first optical delay circuit (123-1; 223-1) in one arm thereof; and
two 3-dB couplers (126, 127; 226, 227) to be connected to the two arms of said unbalanced Mach-Zehnder interferometer respectively.

4. The optical circuit according to Claim 2 configured of a planar lightwave circuit.

5. The optical circuit according to Claim 3 configured of a planar lightwave circuit.

6. A quantum cryptography transmission device (10) comprising:
a light emitting unit (11) configured to emit photons serving as quantum bit information carriers; and
the optical circuit (12) according to Claim 2 connected to said light emitting unit and a transmission path (30).

7. A quantum cryptography transmission device (10A) comprising:
a light emitting unit (11) configured to emit photons serving as quantum bit information carriers; and
the optical circuit (12A) according to Claim 3 connected to said light emitting unit and a transmission path (30).

8. A quantum cryptography reception device (20) comprising:
a light receiving unit (21) configured to receive photons serving as quantum bit information carriers; and
the optical circuit (22) according to Claim 2 connected to said light receiving unit and a transmission path (30).

9. A quantum cryptography reception device (20A) comprising:
a light receiving unit (21) configured to receive photons serving as quantum bit information carriers; and
the optical circuit (22A) according to Claim 3 connected to said light receiving unit and a transmission path (30).

10. A quantum cryptography transmission system comprising a transmission path (30),
a quantum cryptography transmission device configured to transmit a quantum cryptographic key, which is connected through the transmission path, and a quantum cryptography reception device configured to receive the quantum cryptograhic key, which is connected through the transmission path, wherein said quantum cryptography transmission system comprises:
the quantum cryptography transmission device (10) according to Claim 6; and
the quantum cryptography reception device (20) according to Claim 8.

11. A quantum cryptography transmission system comprising a transmission path (30), a quantum cryptography transmission device configured to transmit a quantum cryptographic key, which is connected through the transmission path, and a quantum cryptography reception device configured to receive the quantum encryption key, which is connected through the transmission path, wherein said quantum cryptography transmission system comprises:
the quantum cryptography transmission device (10) according to Claim 6; and
the quantum cryptography reception device (20A) according to Claim 9.

12. A quantum cryptograhy transmission system comprising a transmission path (30), a quantum cryptography transmission device configured to transmit a quantum cryptographic key, which is connected through the transmission path, and a quantum cryptograhy reception device configured to receive the quantum cryptograhic key, which is connected through the transmission path, wherein said quantum cryptography transmission system comprises:
the quantum cryptography transmission device (10A) according to Claim 7; and
the quantum cryptography reception device (20) according to Claim 8.

13. A quantum cryptography transmission system comprising a transmission path (30), a quantum cryptography transmission device configured to transmit a quantum cryptograhic key, which is connected through the transmission path, and a quantum cryptography reception device configured to receive the quantum cryptography key, which is connected through the transmission path, wherein said quantum cryptography transmission system comprises:
the quantum cryptography transmission device (10A) according to Claim 7; and
the quantum cryptography reception device (20A) according to Claim 9.

14. A quantum cryptography transmission system comprising a photon pair generating source (40; 50), a pair of the quantum cryptography reception device, and a transmission path (30) configured to connect said photon pair generating source and each of quantum cryptography reception devices, wherein said quantum cryptography transmission system comprises:
a pair of the quantum cryptography reception devices according to Claim 8 (20).

15. A quantum cryptography transmission system comprising a photon pair generating source (40; 50), a pair of the quantum cryptogarphy reception device, and a transmission path (30) configured to connect said photon pair generating source and each of quantum cryptography reception devices, wherein said quantum cryptography transmission system comprises:
a pair of the quantum cryptotraphy reception devices according to Claim 9 (20A).
